# EUROPEAN PATENT APPLICATION

(11) **EP 4 752 504 A1**
(43) Date of publication of application: **03.06.2026**
(21) Application number: 24216432.5
(22) Date of filing: 29.11.2024
(51) Int. Cl.: G01C 21/20, G01C 21/00, G01S 17/89, G06V 20/00, G06V 20/58

(54) **ULTRA FAST MAPPING**

(71) Applicant: Vorwerk & Co. Interholding GmbH, 42275 Wuppertal (DE)
(72) Inventor: Schüler, Sebastian, 42275 Wuppertal (DE); Kronwald, Andreas, 42275 Wuppertal (DE)
(74) Representative: Friedhofen, Jörg Holger

(57) **Abstract**

The invention relates to a method of mapping an environment for an autonomous device, e.g. a cleaning robot, comprising capturing a data set of the environment using a capturing camera device, processing the data set to generate a 3D scene representation of the environment, converting the 3D scene representation into a format usable by an autonomous device, transmitting the converted 3D scene representation as robot data to the autonomous device and using the robot data for localization and/or navigation of the autonomous device.

## Description

The present invention generally relates to the field of robotics and computer vision, and more particularly to a method of mapping an environment for an autonomous device, e.g. a cleaning robot.

Environment mapping, a crucial component of autonomous navigation, typically relies on the autonomous device itself to create a map of its surroundings. This is often achieved through Simultaneous Localization and Mapping (SLAM) technology, where sensors such as RGB cameras, time-of-flight cameras (ToF cameras) or laser distance scanner (LDS) are integrated into the device. The device explores an unknown environment, creating a map of its surroundings using one of these sensors.

Once the environment has been fully explored, this map can be used by the autonomous device to navigate and work (e. g. clean) within the environment.

For instance, in mobile cleaning robots, homes can be divided into rooms and the robot can then be directed to only clean selected rooms on subsequent cleaning tasks. Additionally, areas that are not traversable for the robot can be marked (e.g. heaters, animal feeding stations, etc.).

While this approach has its advantages, it also presents several disadvantages. The mapping process is inherently slow, limited by the device's physical movement speed and processing speed. Moreover, the initial mapping process requires the device to enter the environment and survey it completely, which can be time-consuming and pose risks of failed localization or collision.

Furthermore, the current approach lacks flexibility in terms of selecting which part of the environment is mapped.

The environment is unknown to the autonomous device, so the entire area must be explored before a map can be created. This limitation renders the process error-prone, as certain parts of the environment cannot be reached (e.g. due to obstacles). Moreover, the device's sensor and processing speed are often limited by cost and hardware design issues, which further hinders the mapping process.

It is therefore an objective of the present invention to provide a novel approach for mapping unknown environments that overcomes the above-mentioned disadvantages of the prior art at least in part.

To solve the technical problem, the invention teaches a method of mapping an environment for an autonomous device, e.g. a cleaning robot, comprising capturing a data set of the environment using a capturing camera device, processing the data set to generate a 3D scene representation of the environment, converting the 3D scene representation into a format usable by an autonomous device, transmitting the converted 3D scene representation as robot data to the autonomous device and using the robot data for localization and/or navigation of the autonomous device.

Autonomous device may be understood as a device that operates independently without human intervention, such as a cleaning robot or service robot.

A capturing camera device may be understood as a mobile phone, smart phone or a different camera which is able to make photos or videos.

Data set of the environment refers to a collection of images or data captured using a capturing camera device, for example, a photo, video, or time-of-flight (ToF) image or point clouds.

Processing may be understood as collecting the data, completing missing data, preparing the data, and enriching the data.

Converting may be understood as manipulating the data, pruning the data, and compressing the data.

Format may be understood as a data structure which is well-suited for the sensor and navigation system of the autonomous device like point cloud data which is preferably compressed.

Robot data refers to data suitable for the navigation sensor of the robot.

One advantage of this arrangement is that it provides flexibility in terms of selecting which part of the environment is mapped. This allows for targeted mapping and exploration of specific areas, reducing the overall time required to map an environment.

One additional benefit of this arrangement is that it enables the generation of a detailed and accurate 3D model of the environment, which can be converted into robot-data for localization and navigation purposes without losing necessary and detailed information.

One further advantage of this arrangement is that it enables efficient processing of the data by the capturing camera device, reducing the risk of errors and improving overall system performance.

One additional benefit of this arrangement is that it enables the autonomous device to accurately navigate its environment, reducing the risk of collisions and improving overall system performance.

By capturing a data set of the environment using a capturing camera device, processing the data set to generate a 3D scene representation, converting the 3D scene representation into a format usable by an autonomous device, transmitting the converted 3D scene representation as robot data to the autonomous device, and using the robot data for localization and/or navigation of the autonomous device, this invention provides a novel approach for mapping unknown environments that overcomes the above-mentioned disadvantages of the prior art at least in part.

It may be provided that the conversion of the 3D scene representation is preferably conducted in dependence of the sensor and navigation system of the autonomous device.

Sensor and navigation system refer to a software-based system that uses various types of sensors, such a Laser Distance Scanner (LDS), ToF camera, RGB camera, Ultrasonic sensors, or others, to navigate within an environment. This system enables the autonomous device to accurately perceive its surroundings and make decisions based on that information.

The conversion is preferably conducted in dependence of this sensor and navigation system, which means that the 3D scene representation is tailored to the specific capabilities and limitations of the system. For example, if the system relies heavily on LDS data for localization, the converted 3D scene representation may be optimized for LDS-based navigation.

One advantage of this arrangement is that it enables the autonomous device to utilize its existing sensor and navigation system more effectively, improving overall performance and accuracy.

By conducting the conversion in dependence of the sensor and navigation system of the autonomous device, this invention provides a novel approach for mapping unknown environments that considers the specific capabilities and limitations of the autonomous device.

It may be provided that the conversion into a format usable for the autonomous device is carried out in such a way that preferably only the data required for localization and navigation of the autonomous device are transmitted.

Data required for localization and navigation refers to the specific information necessary for the autonomous device to accurately localize itself within its environment and navigate through it, such as spatial coordinates, object boundaries, or other relevant features. This information is essential for the autonomous device to make informed decisions and operate effectively.

This arrangement enables the transmission of only the most critical data, reducing the amount of data that needs to be transmitted and processed by the autonomous device.

One advantage of this approach is that it reduces the risk of data overload, improving system performance and efficiency.

By transmitting only the data required for localization and navigation, this invention provides a novel approach for mapping unknown environments that optimizes communication between the autonomous device and its separated capturing camera device.

It may be provided that converting the 3D scene representation into a format usable by an autonomous device comprises preferably at least one of the following steps: manipulation of the data with mathematical methods, cutting out unnecessary data and/or compressing the data.

Mathematical methods preferably refer to specific algorithms used to manipulate the 3D scene representation.

For example, this may involve calculating different viewpoints and generating sectional views or cutting planes to create a more suitable data format for the sensor and navigation system of the autonomous device. The mathematical methods may also include filtering, smoothing or simplification algorithms.

Unnecessary data refers to information in the 3D scene representation that is not beneficial for navigation or localization purposes. In this context, pruning data that has no significance for navigation, such as ceiling data of a room, reduces the amount of data that needs to be transmitted to the autonomous device.

Compressing the data refers to the process of reducing the amount of data by removing redundant or irrelevant information. This step enables the efficient transmission of the 3D scene representation over communication channels, reducing the risk of data loss or corruption.

This arrangement enables the autonomous device to receive robot data which is tailored to its specific needs and capabilities.

One advantage of this approach is that it improves system performance by reducing the amount of data that needs to be transmitted, while also ensuring that only relevant information is used for navigation and localization purposes.

It may be provided that converting the 3D scene representation data into a format usable by an autonomous device involves converting the 3D scene representation data into a format being compatible with the format of a data output of at least one navigation sensor of the autonomous device.

Compatible refers to a format that is similar or identical to the format of the data output of the navigation sensor. This ensures seamless integration of the converted 3D scene representation data by the autonomous device's navigation system.

Data output refers to the type of data provided by the navigation sensor, such as lidar data, point clouds or camera images.

This arrangement enables the autonomous device to utilize the converted 3D scene representation data directly, preferably without requiring additional processing or conversion steps within the autonomous device.

One advantage of this approach is that it streamlines the mapping process and reduces the risk of errors or inaccuracies resulting from mismatched formats between the converted 3D scene representation data (robot data) and the navigation sensor's output.

It may be provided that converting the 3D scene representation into a format usable by an autonomous device involves reducing the 3D scene representation for autonomous devices with an LDS-based navigation system to the cutting plane of the LDS laser of the autonomous device.

Cutting plane refers to the specific plane or region scanned by the LDS laser, which is used for navigation purposes. This reduction enables the autonomous device to utilize only the relevant data from the 3D scene representation that is necessary for its navigation system.

It may be provided that converting the 3D scene representation into a format usable by an autonomous device involves reducing the 3D scene representation for autonomous devices with a ToF camera-based navigation system to the field of view of the ToF camera of the autonomous device.

Field of view refers to the specific region or area captured by the ToF camera, which is used for navigation purposes. This reduction enables the autonomous device to utilize only the relevant data from the 3D scene representation that is necessary for its navigation system.

The conversion of the 3D scene representation to the specific sensor of the navigation system enables the autonomous device to efficiently utilize the converted 3D scene representation data.

One advantage of this approach is that it reduces the amount of data that needs to be transmitted and stored in the autonomous device, thereby improving the overall performance and efficiency of the autonomous device's navigation system.

It may be provided that converting the 3D scene representation into a format usable by an autonomous device involves using a capturing camera device, which is separated from the autonomous device.

Capturing camera device preferably refers to a mobile camera device, such as a mobile phone or smartphone, that captures images and data of the environment. This separation enables the camera device to capture high-quality images and data without being limited by the autonomous device's physical constraints or power requirements.

This arrangement enables the autonomous device to receive converted 3D scene representation data from multiple sources, which one advantage of this approach is that it allows for greater flexibility and adaptability in capturing environmental data.

It may be provided that processing the data set to obtain a 3D representation of the environment involves preferably at least one of the following steps: determination of distances between objects and/or walls, recognition of objects and/or adding or extrapolation of missing information.

These processing steps enable the creation of a detailed and accurate 3D representation of the environment.

Determining distances between objects and/or walls provides spatial awareness and understanding of the environment.

Recognition of objects enables the detection and identification of specific features and landmarks.

Adding or extrapolating missing information allows for the completion of incomplete data sets and the filling in of gaps, resulting in a more comprehensive 3D representation.

This arrangement enables the creation of a robust and accurate 3D representation of the environment.

One advantage of this approach is that it provides a detailed and realistic understanding of the surroundings, giving enough information of the environment to perform a precise conversion of the 3D representation afterwards.

It may be provided that the method further comprises analyzing the generated 3D scene representation to preferably detect obstacles or hazards in the environment and preferably deriving no-go zones.

No-go zones refer to specific areas where obstacles such as stairs, cables, carpet edges, and carpet fringes are located. This analysis enables the detection of potential hazards and the derivation of safe navigation paths.

This arrangement enables the autonomous device to navigate safely and efficiently through the environment by avoiding obstacles and no-go zones, which one advantage of this approach is that it reduces the risk of accidents or damage caused by collisions with obstacles.

It may be provided that the method further comprises a control step in which the autonomous device preferably detects and tracks changes in the environment over time by updating the robot data.

The result of this process is an updated map, which combines the original robot data with changes detected over time. This updated map replaces the original robot data, providing an improved and more accurate representation of the environment.

This arrangement enables the autonomous device to adapt to changing environmental conditions and maintain a precise understanding of its surroundings, which one advantage of this approach is that it improves the accuracy and reliability of the autonomous device's navigation and decision-making processes.

It may be provided that there is a system comprising an autonomous device and a capturing camera device, which together can perform the method according to one or more of the preceding claims.

This system enables the autonomous device to receive and utilize robot data from the capturing camera device, thereby facilitating updating of 3D scene representations of the environment.

It may be provided that there is a system comprising an autonomous device and a capturing camera device, wherein the autonomous device is preferably a household cleaning or service robot.

This arrangement enables the system to provide efficient and effective cleaning or service capabilities, as the autonomous device can navigate and clean or perform services in various environments, while the capturing camera device provides accurate and sensor-adjusted 3D scene representations of the environment.

It may be provided that a cleaning robot is designed to receive a converted 3D scene representation (robot data) from an external device.

The external device can be identical to the capturing camera device or can be a server, for example a cloud server.

This arrangement enables the robot to navigate and make decisions based on the received robot data, where the navigation and decision-making taking place inside the robot.

One advantage of this approach is that it allows for efficient and localized decision-making, enabling the robot to adapt quickly to changing environmental conditions.

The following figures and the accompanying description are provided solely for illustrative purposes and do not limit the scope of the invention. The figures show a schematic representation:
- Fig. 1:: a cleaning robot as an autonomous device
- Fig. 2:: a system of a capturing camera device and cleaning robot
- Fig. 3:: a first method for mapping an unknown environment (2 system components)
- Fig. 4:: a second method for mapping an unknown environment (3 system components)
- Fig. 5:: an example of the conversion of a 3D scene representation to robot data

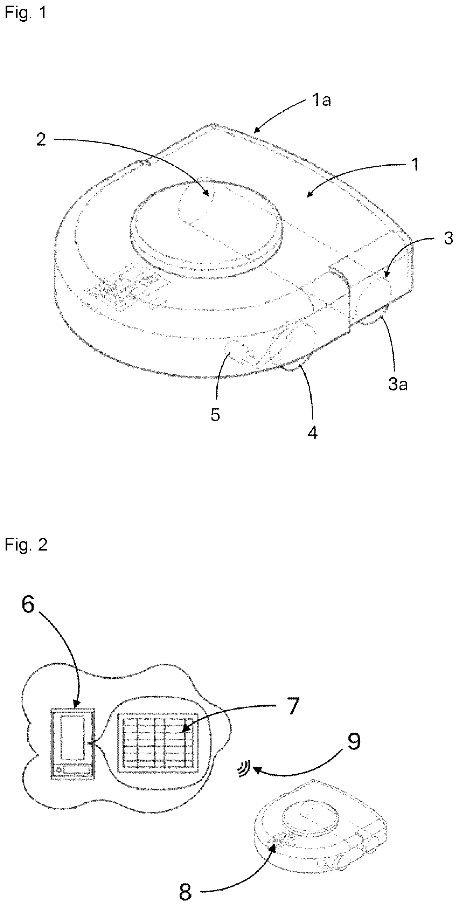

Figure 1 shows an example of an autonomous device which is a cleaning robot 1 with a sensor system 2, a cleaning unit 3, with at least one drive wheel 4 and with at least one motor 5. The sensor system 2 for navigation is a laser distance scanner (LDS). The cleaning robot 1 which may be referred to herein as a "D-shape" though the essential feature here is that the front portion 1 a of the cleaning robot 1 is substantially flat or straight, rather than curved. The flatness of the front portion of the cleaning robot 1 yields the advantage that a brush 3a of a cleaning unit 3 may be positioned more closely toward the front of the device, enabling the cleaning robot to clean more closely to obstacles around or near which the cleaning robot is supposed to clean.

Figure 2 shows an example of the system for mapping an unknown environment consisting of at least one capturing camera device 6 and a cleaning robot 1 as an autonomous device. Tasks 7 of the capturing camera device 6 include capturing the data set of the environment, processing the data set to a 3D scene representation, converting the 3D scene representation to data (robot data) suitable for the specific robot's sensor system 2 for navigation and transmitting the robot data to the receiving electronical unit 8 of the robot 1. Reference 9 indicates a wireless data transmission. The task of the cleaning robot 1 preferably includes using the robot data for localization and/or navigation.

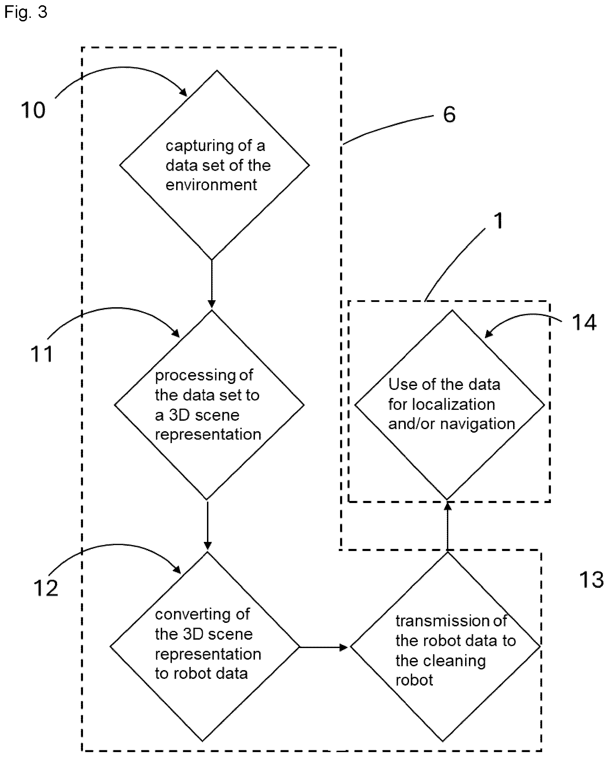

Figure 3 shows a first method for mapping an unknown environment for an autonomous device such as a cleaning robot 1 according to the invention and shows an example of where the different tasks can be carried out. In one implementation, the capturing of a data set of the environment 10, the processing of the data set to a 3D scene representation 11, the converting of the 3D scene representation to robot data 12 and the transmission 13 of the robot data to the cleaning robot 1 is carried out in the capturing camera device (6). The cleaning robot 1 receives the robot data preferably directly from the capturing camera device 6 and uses the data for localization and/or navigation. The localization and/or mapping is not shown in the figures. It furthermore incorporates the calculation of a cleaning path and carrying out the cleaning according to the calculated cleaning path.

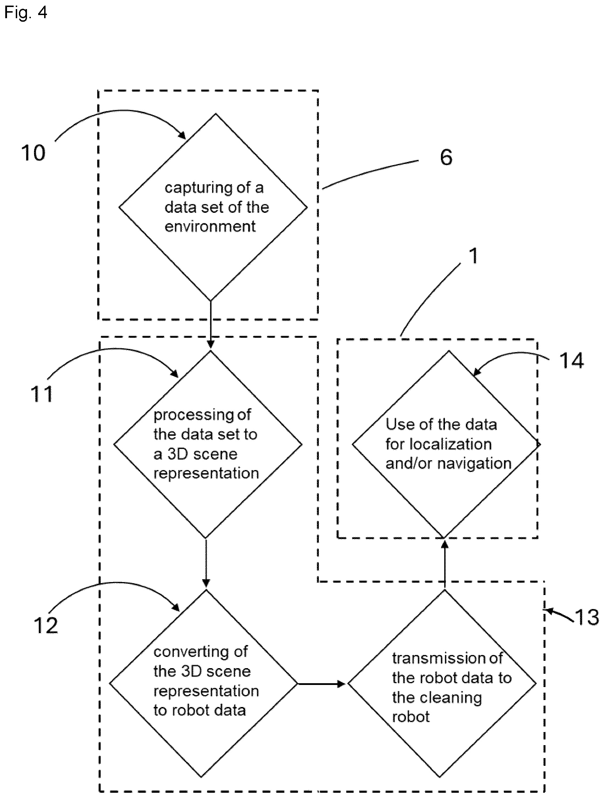

Figure 4 shows a second method for mapping an unknown environment for an autonomous device such as a cleaning robot (1) according to the invention and shows an example of where the different tasks can be carried out. In one implementation, just the capturing of a data set of the environment (10) is conducted in the capturing camera device (6) where the processing of the data set to a 3D scene representation (11), the converting of the 3D scene representation to robot data (12) are carried out on a cloud server. As shown in figure 4, also the transmission of the robot data to the robot (13) is carried out by the cloud server. The cleaning robot (1) receives the robot data (12) and uses the data for localization and/or navigation (14).

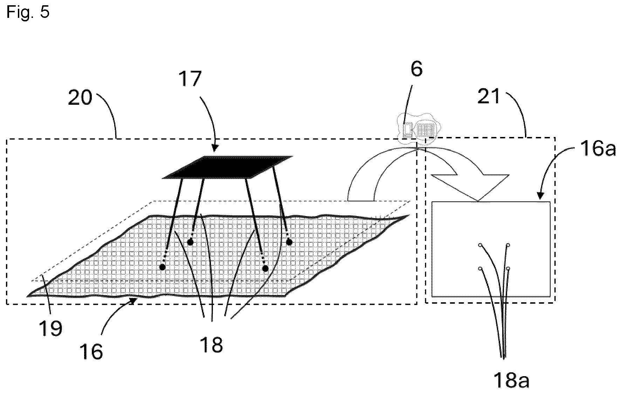

Figure 5 shows the converting of the captured and processed data which might be captured by the capturing camera device (6). A table (17) with four table legs (18) stands on a carpet. The captured data (10) of this scene are processed to a 3D scene representation (11) by the capturing camera device (6). An image (20) of the 3D scene representation (11) is shown in figure 5. The 3D scene representation (11) is subsequently converted to robot data (12). The cleaning robot (1) which is used in this example and which is not shown in figure 5 uses a laser distance scanner (LDS) for localization and navigation. Hence, the image (20) is converted in such a way that the cleaning robot (1) can handle this data. In the 3D scene representation, there is inserted a cutting plane (19) wherein the distance between the cutting plane (19) and the floor or carpet (16) corresponds to the distance of the laser distance scanner and the floor or carpet (16). The conversion reduces the 3D scene representation to the cutting plane (19) of the LDS laser of the autonomous device.

The laser distance scanner detects distances and enables the cleaning robot (1) via its navigation unit to identify the outer appearance of objects in a two-dimensional way. The image captured by the LDS is restricted to outlines reflecting the laser beam of the LDS in a height above the floor matching the optical path of the laser beam. The 3D scene representation (11) is converted into robot data (12) which are transferred to the cleaning robot (1). In figure 5 there is shown that the 3D scene is reduced to a 2D form (16a). The table legs (18) are represented by circles indicating the circular cross sections (18a) of the four table legs (18). The robot data (12) which is transmitted to the cleaning robot (1) according to figure 5 is directly sent from the capturing camera device (6) to the cleaning robot (1).

## Claims

1. A method of mapping an environment for an autonomous device, e.g. a cleaning robot(1), comprising capturing a data set of the environment (10) using a capturing camera device (6), processing the data set to generate a 3D scene representation (11) of the environment, converting the 3D scene representation (11) into a format usable by an autonomous device, transmitting the converted 3D scene representation (11) as robot data (12) to the autonomous device and using the robot data (12) for localization and/or navigation of the autonomous device.

2. Method according to claim 1, wherein the conversion of the 3D scene representation (11) is conducted in dependence of the sensor and navigation system of the autonomous device.

3. Method according to claim 1 or 2, wherein the conversion into a format usable for the autonomous device is carried out in such a way that only the data required for localization and navigation of the autonomous device are transmitted.

4. Method according to one of the preceding claims, wherein converting the 3D scene representation (11) into a format usable by an autonomous device comprises at least one of the following steps
- manipulation of the data with mathematical methods
- cutting out unnecessary data
- compressing the data.

5. Method according to one of the preceding claims, wherein the 3D scene representation (11) is converted into a format being compatible with the format of a data output of at least one navigation sensor of the autonomous device.

6. Method according to one of the preceding claims, wherein the 3D scene representation (11) for autonomous devices with a laser distance scanner (LDS) based navigation system are reduced to the cutting plane (19) of the LDS laser of the autonomous device.

7. Method according to one of the preceding claims, wherein the 3D scene representation (11) for autonomous devices with a time-of-flight camera (ToF camera) based navigation system are reduced to the field of view of the ToF camera of the autonomous device.

8. Method according to one of the preceding claims, wherein the capturing camera device (6) is separated from the autonomous device.

9. Method according to one of the preceding claims, wherein processing the data set to obtain a 3D representation (11) of the environment includes at least one of the following steps:
- determination of distances between objects and/or walls
- recognition of objects
- adding or extrapolation of missing information

10. Method of claim 9, further comprising analyzing the generated 3D scene representation (11) to detect obstacles or hazards in the environment.

11. Method according to claim 10, further include the derivation of no-go zones.

12. Method of one of the preceding claims, further comprising a control step in which the autonomous device detects and tracks changes in the environment over time by updating the robot data (12).

13. System of an autonomous device and a capturing camera device (6) to perform the method according to one of the preceding claims.

14. System according to claim 12, wherein the autonomous device is a cleaning robot (1), preferably a household cleaning or service robot.

15. Cleaning robot to receive a converted 3D scene representation (robot data, 12) from an external device whereby the cleaning robot navigates and makes decisions based on the robot data (12).
